# EUROPÄISCHE PATENTSCHRIFT

(11) **EP 0 735 454 B1**
(45) Veröffentlichungstag und Bekanntmachung des Hinweises auf die Patenterteilung: **22.03.2000**
(21) Anmeldenummer: 96100384.5
(22) Anmeldetag: 12.01.1996
(51) Int. Cl.: G05G 1/14, F16C 11/02, B60T 7/06

(54) **Gelenkverbindung**
Pivoting connection
Connection pivotante

(30) Priorität: 30.03.1995 DE 19511716
(43) Veröffentlichungstag der Anmeldung: 02.10.1996
(73) Patentinhaber: Dr.Ing.h.c. F. Porsche Aktiengesellschaft, 70435 Stuttgart (DE)
(72) Erfinder: Baumann, Hans-Uwe, D-70437 Stuttgart (DE)

(56) Entgegenhaltungen:
- DE-A- 4 406 384
- FR-A- 601 018
- FR-A- 1 300 937
- FR-A- 2 696 397
- FR-E- 32 334
- FR-E- 47 746
- FR-E- 81 912

## Beschreibung

Die Erfindung bezieht sich auf eine Vorrichtung zum Verbinden eines Bremspedals mit einer Zug- bzw. Druckstange einer Bremsanlage über einen Bolzen.

Aus der DE 43 14 858 A1 ist ein Scharnier für Türen, Deckel und dgl. für Fahrzeuge bekannt. Dieses Scharnier umfaßt einen Scharnierbolzen, auf dem ein Kugelelement angeordnet ist, das einen Scharnierarm trägt.

Aus der FR-E-32 334, die als nächstliegenden Stand der Technik betrachtet wird, geht eine Verbindungseinrichtung hervor, bei der zwischen einem gabelförmigen Bügel und einem Beschlag ein Bolzen mit balligem Mittelteil vorgesehen ist und der Bügel zwei Schenkel aufweist, die den Beschlag von außen mit Spiel umgreifen. Zur Aufnahme dieses balligen Mittelteiles ist im Beschlag eine Bohrung angebracht, die das ballige Mittelteil unmittelbar aufnimmt. Durch die ballige Form des Bolzens ist eine Pendelbewegung des Bügels gegenüber dem Beschlag möglich.

Ferner ist es aus der FR-A-26 96 397 für die Verbindung eines Bremspedales eines Kraftfahrzeuges mit einem Bremskraftverstärker bekannt geworden, zwischen einem Schenkel des Bremspedales und dem Bremskraftverstärker eine Druckstange mit gabelförmigen Ende vorzusehen, die über einen Bolzen mit dem Schenkel des Bremspedales verbunden ist.

Aufgabe der Erfindung ist es, eine einfache Lagerung zwischen einem Bremspedal und einer Zug- bzw. Druckstange zu schaffen, die Pendelbewegungen der Bauteile zueinander zuläßt.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß ein Bolzen mit einem balligen Mittelteil in einer Stahlhülse mit einer Kunststoffbeschichtung als Verbindungselement verwendet wird. Der Bolzen ist einfach und kostengünstig herstellbar. Über den Bolzen kann ein Ausgleich von Winkelfehlern zwischen einem Bremspedal mit einer Druckstange für eine Bremsanlage erfolgen. Es ist über die ballige Form des Bolzens eine Pendelbewegung des Bremspedales zur Stange bzw. der Stange zum Bremspedal möglich. Durch den Bolzen können Fluchtungsfehler der Teile zueinander in sich oder Verformungen unter hoher Last nicht als Biegemoment in die Stange eingeleitet werden, welches zu einer Knickung und somit zu einem Ausfall der Bremsanlage führen würde. Die Kosten für die Herstellung des Bolzens sind äußerst gering, da ein Bolzen und eine Lagerbuchse zur schwenkbaren Verbindung zwischen Bremspedal und Stange sowieso benötigt werden und lediglich die ballige Form anstelle eines konstanten Durchmessers auf den Bolzen gedreht werden muß.

Es sind zum Ausgleich von Winkelfedern auch solche Bolzen denkbar, die zu beiden Seiten als Kegelstümpfe ausgeführt sind, so daß nur der mittige Bereich des Bolzens eine dem Innendurchmesser der Lagerbuchse entsprechenden Außendurchmesser aufweist.

Ein Ausführungsbeispiel der Erfindung ist in der Zeichnung dargestellt und wird im folgenden näher beschrieben.
Es zeigen
- Fig. 1: ein Pedal mit einer über einen Bolzen verbundenen Zug- bzw. Druckstange,
- Fig. 2: eine vergrößerte Darstellung der Bolzen-Verbindung,
- Fig. 3: eine Darstellung der Verbindung zwischen Pedal und Stange unter einem Winkel.

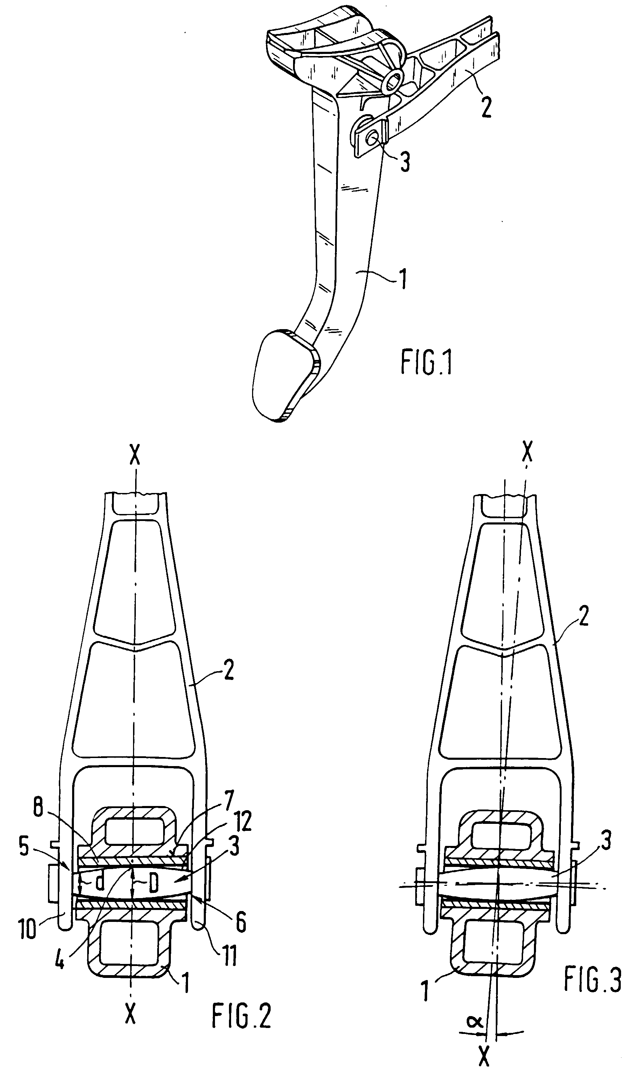

In Fig. 1 ist ein Bremspedal 1 mit einer Druck- bzw. Zugstange 2 gezeigt, die über einen Bolzen 3 schwenkbar miteinander verbunden sind.

Der Bolzen 3 ist einteilig mit einem balligen Mittelteil 4 ausgeführt, das in der Mittenebene X-X den größten Durchmesser D aufweist. Zu den freien Enden 5, 6 hin ist der Bolzen 3 mit einem kleineren Durchmesser d versehen.

In der Bohrung 7 des Pedals 1 ist eine Lagerbuchse 8 angeordnet, die aus Stahl mit einer Innenbeschichtung aus einem Kunststoff besteht. Der Bolzen liegt mit seinem balligen Mittelteil unmittelbar an der Innenfläche der Lagrbuchse 8 an.

Durch die ballige Ausbildung des Bolzens 3 kann, wie Fig. 3 näher zeigt, die Stange 2 gegenüber dem Pedal 1 eine Auslenkbewegung durchführen. Diese kann bis zu α = 5° betragen. Die ballige Ausformung des Mittelteils 4 des Bolzens kann auch aus zwei gegeneinander stoßende Kegelstümpfen bestehen, die im zusammentreffenden Bereich den Durchmesser D aufweisen, was nicht näher dargestellt ist.

Die Druckstange 2 weist zur Verbindung mit dem Pedal einen Gabelkopf mit zwei das Pedal von außen mit Spiel umgreifenden Schenkel 10, 11 auf. In Bohrungen der Schenkel 10, 11 ist der Bolzen 3 mit zylindrischen Enden gehalten. Aufgrund des sich zwischen der Lagerhülse 8 und dem balligen Mittenteil 4 ergebenden Freiraumes 12, kann eine Kippbewegung zwischen den mit dem Bolzen 3 verbundenen Bauteilen Pedal 1 und Stange 2 in Grenzen erfolgen.

Der Bolzen können auch aus einem Hülsenelement bestehen, das entsprechend mit einem balligen Mittelteil ausgeformt ist. Auch könnte die Hülse 8 zur Lagerung eines zylindrischen Bolzens mit einem balligen Mittelteil ausgeführt sein.

## Patentansprüche

1. Vorrichtung zum Verbinden eines Bremspedals mit einer Zug- und/oder Druckstange (2) über einen Bolzen (3), wobei die Stange (2) einen Gabelkopf mit zwei Schenkeln aufweist, die das Pedal (1) von außen mit Spiel umgreifen, wobei
- der Bolzen (3) ein ballig ausgeführtes Mittelteil (4) aufweist,
- die freien Bolzenenden (5, 6) einen geringeren Durchmesser (d) aufweisen als das ballige Mittelteil (4) mit dem größeren Durchmesser (D),
- der Bolzen (3) in einer Stahlhülse (8) mit einer Kunststoffbeschichtung gehalten ist, und
- der Bolzen (3) eine derartige ballige Form im Mittelteil aufweist, daß sich eine Pendelbewegung von annähernd bis zu α = 5° des Pedals (1) und/oder der Stange (2) ergibt.

2. Vorrichtung nach Anspruch 1, **dadurch gekennzeichnet**, daß der Verbindungsbolzen (3) in der Mittenachse (X-X) des Pedals (1) und der Stange (2) eine dem Innendurchmesser der Lagerbuchse (8) entsprechenden Außendurchmesser (D) aufweist und zu den freien Enden (5, 6) hin der Bolzen (3) jeweils als Kegelstümpfe ausgeführt ist.

3. Vorrichtung nach Anspruch 1, **dadurch gekennzeichnet**, daß der Bolzen (3) aus einem Hülsenelement (4) besteht.

4. Vorrichtung nach Anspruch 1, **dadurch gekennzeichnet**, daß die Hülse (8) an ihrer Innenseite mit einem ballig geformten Mittelteil ausgebildet ist.

## Claims

1. A device for connecting a brake pedal to a pull and/or push rod (2) by way of a pin (3), wherein the rod (2) is provided with a fork head with two arms engaging around the pedal (1) from the outside with play, wherein
- the pin (3) is provided with a convex middle part (4),
- the free ends (5, 6) of the pin have a smaller diameter (**d**) than the convex middle part (4) with the larger diameter (**D**),
- the pin (3) is held in a steel sleeve (8) with a plastics-material coating, and
- the pin (3) has such a convex shape in the middle part that a movement in pendulum fashion of up to about α = **5**° of the pedal (1) and/or the rod (2) occurs.

2. A device according to Claim 1, **characterized in that** the connecting pin (3) in the median axis (**X**-**X**) of the pedal (1) and the rod (2) has an external diameter (**D**) corresponding to the internal diameter of the bearing bush (8), and the pin (3) is constructed in the form of a frustum towards the free ends (5, 6) in each case.

3. A device according to Claim 1, **characterized in that** the pin (3) comprises a sleeve member (4).

4. A device according to Claim 1, **characterized in that** the sleeve (8) is formed on the inside thereof with a convex middle part.

## Revendications

1. Dispositif destiné à relier une pédale de frein à une barre de traction et/ou de compression (2), par l'intermédiaire d'un axe (3), la barre (2) présentant une tête en fourche avec deux branches qui entourent la pédale (1), de l'extérieur,avec jeu, dans lequel
- l'axe (1) présente une partie centrale (4) bombée,
- les extrémités libres (5, 6) de l'axe présentent un plus petit diamètre (d) que la partie centrale bombée (4) de plus grand diamètre (D),
- l'axe (3) est maintenu dans une douille d'acier avec un revêtement en matière plastique et
- l'axe (3) présente dans sa partie centrale une forme bombée telle qu'il en résulte un mouvement pendulaire, pouvant aller approximativement jusqu'à α = 5°, de la pédale (1) et/ou de la barre (2).

2. Dispositif selon la revendication 1, caractérisé en ce que l'axe de liaison (3) présente, dans l'axe médian (X-X) de la pédale (1) et de la barre (2), un diamètre extérieur (D) correspondant au diamètre intérieur de la douille de palier (8) et vers les extrémités libres (5, 6), l'axe (3) est réalisé sous la forme de troncs de cône.

3. Dispositif selon la revendication 1, caractérisé en ce que l'axe (3) est constitué d'un élément de douille (4).

4. Dispositif selon la revendication 1, caractérisé en ce que la douille (8) présente sur son côté intérieur une partie centrale bombée.
